Europäisches Patentamt

European Patent Office

Office européen des brevets

(11) Veröffentlichungsnummer: **0 289 878 B1**

# (12) EUROPÄISCHE PATENTSCHRIFT

(45) Veröffentlichungstag der Patentschrift: **27.11.91**

(21) Anmeldenummer: **88106412.5**

(22) Anmeldetag: **21.04.88**

(51) Int. Cl.5: **B65C 9/18**, B23D 19/06, B26D 3/10

(54) Verfahren und Vorrichtung zum Schneiden von konturierten Etiketten.

(30) Priorität: **02.05.87 DE 3714662**

(43) Veröffentlichungstag der Anmeldung:
**09.11.88 Patentblatt 88/45**

(45) Bekanntmachung des Hinweises auf die
Patenterteilung:
**27.11.91 Patentblatt 91/48**

(84) Benannte Vertragsstaaten:
**DE ES FR GB IT**

(56) Entgegenhaltungen:
**DE-C- 3 423 674
FR-A- 2 034 915
FR-A- 2 415 047
US-A- 4 061 063
US-A- 4 332 635**

(73) Patentinhaber: **KRONES AG Hermann Kronseder Maschinenfabrik
Böhmerwaldstrasse 5 Postfach 1230
W-8402 Neutraubling(DE)**

(72) Erfinder: **Winter, Horst
Albrecht-Altdorfer-Strasse 14
W-8402 Neutraubling(DE)**

(74) Vertreter: **Patentanwälte Grünecker, Kinkeldey, Stockmair & Partner
Maximilianstrasse 58
W-8000 München 22(DE)**

## Beschreibung

Die vorliegende Erfindung betrifft ein Verfahren und eine Vorrichtung zum Schneiden von konturierten Etiketten in einem Etikettieraggregat aus einem kontinuierlich bewegten Etikettenband, bei dem die Etiketten während der Bandbewegung herausgeschnitten werden.

Während bei den meisten Etikettiermaschinen sogenannte Stapeletiketten verwendet werden, bietet die Verwendung von bedruckten Etikettenbändern insoweit Vorteile, als die in Rollen erhältlichen Etikettenbänder viel kostengünstiger sind als vorgeschnittene Stapeletiketten. Darüber hinaus ist auch die Handhabung, insbesondere die Zufuhr des Etikettenmaterials zur Etikettiermaschine sehr viel einfacher und störungsfreier als bei Stapeletiketten.

Ein Verfahren und eine Vorrichtung der eingangs genannten Art sind aus der DE-OS 29 02 315 bekannt. Bei der dort dargestellten und beschriebenen Etikettiermaschine ist in dem Pfad des Etikettenbandes ein rotierendes Stanzwerkzeug angeordnet, welches sich mit einer der Bandgeschwindigkeit entsprechenden Geschwindigkeit dreht und die konturierten Etiketten ausschneidet, die von dort auf einen Etikettenträger und von dort auf die zu etikettierenden Behältnisse gebracht werden. Das verbleibende Restband wird an dem Etikettenträger vorbeigeführt und wieder auf eine Rolle aufgerollt.

Nachteilig an dem bekannten Verfahren und an der bekannten Vorrichtung ist die Tatsache, daß für jede Etikettenkontur eine eigenes Stanzwerkzeug erforderlich ist. Darüber hinaus unterliegen die Stanzwerkzeuge einem sehr hohen Verschleiß, so daß der Kostenvorteil, der durch die Verwendung des Etikettenbandmaterials erzielt wird, durch die hohen Werkzeugkosten wieder eingebüßt wird.

Darüber hinaus ist es beim Schneiden von Materialbahnen im Querschnitt bekannt, obere und untere Schnittkanten kontinuierlich zu erzeugen. Eine solche Technik ist in der DE-C-34 23 674 beschrieben. Zum Ettikettenschneiden ist diese Vorrichtung jedoch nicht geeignet.

Der Erfindung liegt die Aufgabe zugrunde, ein Verfahren und eine Vorrichtung der eingangs genannten Art derart zu verbessern, daß im weiten Umfange beliebig konturierte Etiketten kostengünstig aus einem Etikettenband hergestellt werden können.

Diese Aufgabe wird erfindungsgemäß dadurch gelöst, daß die obere und/oder die untere Kontur der Etiketten wahrend der Bewegung des Etikettenbandes in einem Schnitt kontinuierlich fortschreitend geschnitten werden, so daß das Etikettenband mit einer oberen und/oder unteren Kontur versehen wird, und daß das konturierte Etikettenband unmittelbar nach dem Schneiden der Konturen in die einzelnen Etiketten abgetrennt wird.

Diese Lösung hat den Vorteil, daß nun im weiten Umfange beliebig konturierte Etiketten aus Bandmaterial geschnitten werden können, ohne daß für jede Kontur ein neues Schneidwerkzeug erforderlich ist. Die Standzeiten der Werkzeuge können durch dieses Verfahren wesentlich erhöht werden. Die Konturen lassen sich beliebig ändern, in dem die Konturenschnitte entsprechend der Bewegung des Etikettenbandes höher oder tiefer an dem Etikettenband vorgenommen werden. Der kontinuierlich fortschreitende Schnitt kann allein durch die Bewegung des Etikettenbandes erreicht werden. Die Kontur des Etikettenbandes wird nur durch eine Querbewegung der Schneidmittel zur Bewegungsrichtung des Etikettenbandes erreicht.

Dabei ist vorgesehen, daß das konturierte Etikettenband unmittelbar nach dem Konturschneiden in die einzelnen Etiketten abgetrennt wird. Das ist deswegen günstig, da für dieses Abtrennen keine teueren Spezialwerkzeuge benötigt werden, sondern herkömmliche Messerwalzen od. dgl., die unabhängig von der gewünschten Kontur einer Etikette eingesetzt werden können.

Hinsichtlich der Vorrichtung wird die Aufgabe erfindungsgemäß dadurch gelöst, daß die Schneideinrichtung ein oberes und/oder ein unteres, quer zur Bewegungsrichtung des Bandes bewegbares, Konturmesser zum Schneiden einer oberen und/oder einer unteren Etikettenkontur aufweist und daß das sich mit dem Etikettenband mitbewegende Messer zum Abtrennen der einzelnen Etiketten aus dem konturierten Etikettenband ausgebildet ist.

Bei der erfindungsgemäßen Vorrichtung ist also die Schneideinrichtung mit unabhängig voneinander arbeitenden Schneidelementen bzw. Messern ausgerüstet. Während das sich mit dem Etikettenband mitbewegende Messer nur noch zum Abtrennen der einzelnen Etiketten dient und nicht mehr zum Ausstanzen der gesamten Etikettenkontur, wird Letztere durch die kontinuierlich schneidenden Konturmesser hergestellt. Als Konturmesser kommt hier jegliches Schneidelement in Frage, das geeignet ist, das Etikettenband zur Erzeugung einer oberen oder unteren Kontur aufzutrennen.

Gleiches gilt für das sich in Bewegungsrichtung des Bandes mitbewegende Abtrennmesser.

Das Abtrennmesser läßt sich auf vorteilhafte Weise als eine mit einem feststehenden Messer zusammenwirkende Messerwalze ausbilden.

Gemäß einer bevorzugten Ausführungsform umfaßt die Schneideinrichtung eine Steuereinrichtung, die die Querbewegung der Konturmesser in Abhängigkeit der Bandgeschwindigkeit steuert. Durch diese Steuerung wird die Kontur der einzelnen Etiketten erzeugt. Die Querbewegung der Konturmesser kann auf elektronischem Wege programmierbar und mit Schrittmotoren realisiert werden. Es ist jedoch eine mechanische Steuerung denkbar.

Gemäß einer bevorzugten Ausführungsform umfaßt die Steuereinrichtung für die Querbewegung der Konturmesser eine mit dem Etikettenbandantrieb antriebsverbundene und synchron laufende Kurvenscheibe mit Nutkurven. Sollen in der Kontur andere Formetiketten hergestellt werden, so braucht lediglich die Kurvenscheibe gegen eine andere Kurvenscheibe ausgewechselt zu werden. Ein Werkzeugwechsel ist nicht erforderlich.

Die Quer- bzw. Höhenverstellung der Konturmesser kann auf einfache Weise dadurch erreicht werden, daß die Konturmesser an einem ortfest gelagerten Doppelhebel angebracht sind, dessen anderes Ende in einer Nutkurve der Kurvenscheibe eingreift. Hierdurch wird eine besonders einfache Höhenbewegung der Konturmesser erreicht, die speziell auch zur Verarbeitung von Kunststoffbändern in Verbindung mit Glühdrähten oder Hochdruck-Wasserstrahldüsen anstelle von Metallschneiden geeignet ist.

Besonders vorteilhaft ist es, wenn die Steuereinrichtung derart ausgebildet ist, daß die Konturmesser nicht nur quer sondern auch tangential beweglich zur zu schneidenden Kontur sind. Dies ist insbesondere dann von Vorteil, wenn beispielsweise Stahlmesser verwendet werden, bei denen hinter der Schneide noch ein längerer Messerkörper folgt. Die tangentiale Ausrichtung zur Kontur gewährleistet, daß der Messerkörper stets in dem bereits geschnittenen Bereich liegt.

Gemäß einer Ausführungsform umfaßt die Schneideinrichtung an Vertikalführungen höhenbeweglich, d.h. quer zur Bewegungsrichtung des Bandes beweglich, gelagerte Schlitten zur Halterung der Konturmesser.

Um eine tangentiale Ausrichtung der Messer zur Etikettenkontur zu erreichen, ist es in vorteilhafter Weise auch möglich, daß die Schlitten bezüglich der Vertikalführung um eine horizontale Achse schwenkbar gelagert sind.

Obwohl die Schlitten auch bezüglich ihrer Querbewegung als auch ihrer Schwenkbewegung durch programmierbare Schrittmotoren gesteuert werden können, ist es vorteilhaft, daß die Steuereinrichtung eine Kurvenscheibe für die Schwenkbewegung umfaßt.

Besonders verschleißarm lassen sich die Konturmesser als drehbar gelagerte und mit ebenfalls drehbaren Gegenmessern zusammenwirkende Messerscheiben ausbilden. Es ist vorteilhaft, wenn Messerscheiben und Gegenmesser antreibbar ausgebildet sind. Hierdurch ergibt sich stets ein sauberer Schnitt; außerdem können sich die Messerscheiben durch die angetriebene Drehbewegung selbst nachschärfen.

Gemäß einer Weiterbildung der Erfindung ist jeweils zum Antrieb einer Messerscheibe und eines Gegenmessers ein an einer Vertikalführung höhenbewegliches Zahnrad angeordnet. Dieses Zahnrad kann daher die Höhenbewegungen des Schlittens mitausführen.

Zum Antrieb dieses Zahnrades ist vorzugsweise vorgesehen, daß an einer die Kurvenscheibe antreibenden Welle ein mit dem höhenbeweglichen Zahnrad kämmendes Antriebszahnrad mit breiter Zahnflanke drehfest angebracht ist. Das höhenbewegbare Zahnrad kann entlang der breiten Zahnflanke des Antriebszahnrades verschoben werden und bleibt dennoch stets mit diesem Zahnrad in Eingriff.

Wenn der eigentliche Antrieb der Scheibenmesser von dem höhenbeweglichen Zahnrad über einen Riementrieb auf die dem Scheibenmesser und dem Gegenmesser zugeordneten Lagerwellen erfolgt, können mit dem Riementrieb auch etwaige Schwenkbewegungen zur Tangentialführung der Konturmesser ausgeglichen werden.

Gemäß einer bevorzugten Ausführungsform ist die Messerwalze als die konturierten Etiketten ansaugender Vakuumzylinder ausgebildet. Die Messerwalze übernimmt so gleichzeitig eine Transportfunktion, indem sie die abgetrennten Etiketten an die nächste Bearbeitungsstation übergibt.

Besonders vorteilhaft ist auch, daß zwischen den Konturmessern und der Messerwalze ein Walzenpaar angeordnet ist, wobei die eine Walze als Umlenkwalze für das konturierte Etikettenband ausgebildet ist, während die andere Walze als Ablenkwalze für die abgeschnittenen Randstreifen ausgebildet ist. Auf diese Weise ergibt sich nirgends in der Etikettiermaschine ein Materialstau. Sollten beim Abtrennen der einzelnen Etiketten Abfallsegmente übrigbleiben, so können diese weggeblasen und abgesaugt werden.

Insbesondere dann, wenn ein Kunststoffband zu Etiketten verarbeitet werden soll, können die Konturmesser vorteilhaft als Glühdrähte ausgebildet sein.

Eine andere vorteilhafte Ausbildung der Konturmesser ergibt sich, wenn diese eine Laserkanone aufweisen, deren Laserstrahl beispielsweise über Spiegelscanner zur Ausbildung der Etikettenkontur abgelenkt wird. Solche als Schwenkspiegel ausgebildete Spiegelscanner ermöglichen es, daß die Laserkanone ortsfest auf dem Maschinentisch angebracht ist, wobei die Bewegungen des Laserstrahls einfach über die Schwenkspiegel erreicht werden können. Die Kopplung zur Bandgeschwindigkeit des zu schneidenden Etikettenbandes kann auf elektrischem Wege erfolgen, so daß auf eine mechanische Steuerung der Schneideinrichtung durch beispielsweise Kurvenscheiben od. dgl. verzichtet werden kann.

Vorteilhafterweise läßt sich als Konturmesser auch eine Wasserstrahlsäge einsetzen. Eine solche Wasserstrahlsäge eignet sich besonders für Etikettenbänder aus Kunststoff.

Im folgenden werden Ausführungsbeispiele der Erfindung anhand einer Zeichnung näher erläutert. Es zeigen:

Fig. 1    eine Draufsicht auf eine erste Ausführungsform einer erfindungsgemäßen Vorrichtung zum Etikettenschneiden,

Fig. 2    einen Teilschnitt durch die Vorrichtung in Fig. 1 entlang der Linie II-II,

Fig. 3    eine zweite Ausführungsform einer erfindungsgemäßen Schneidvorrichtung,

Fig. 4    einen Schnitt durch die Vorrichtung aus Fig. 3 entlang der Linie IV-IV und

Fig. 5    einen Höhenschnitt durch die Vorrichtung gemäß Fig. 3 entlang der Linie V-V in Fig. 4.

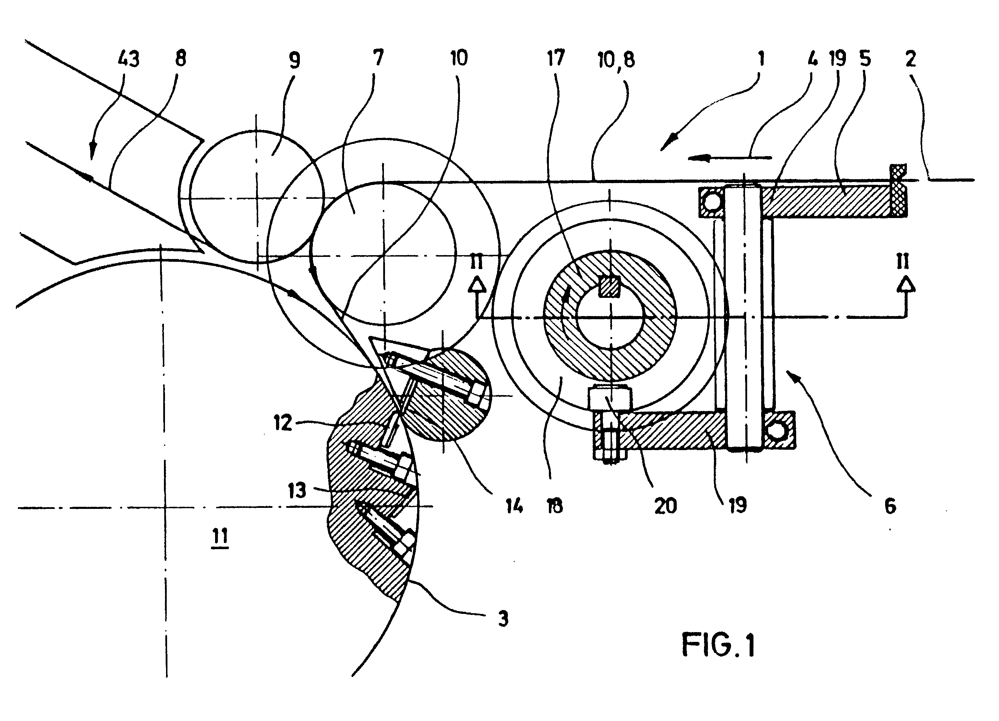

Die Fig. 1 zeigt den Grundaufbau einer erfindungsgemäßen Vorrichtung 1 zum Schneiden von konturierten Etiketten aus einem kontinuierlich bewegten Etikettenband 2, bei dem die Etiketten 3 während der Bandbewegung herausgeschnitten werden.

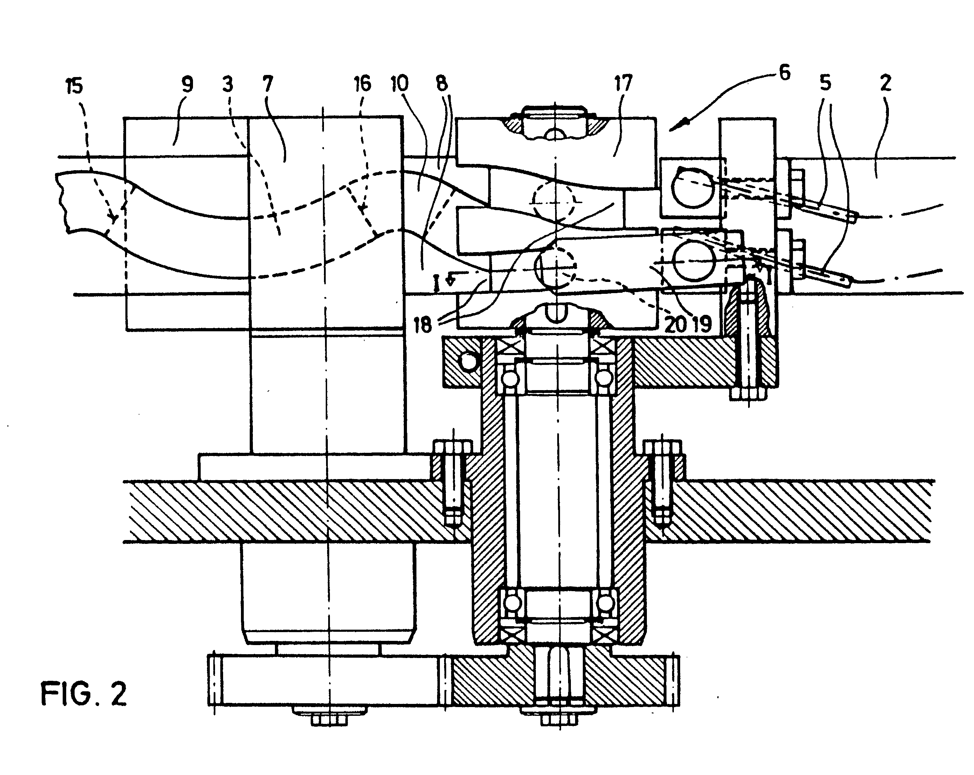

Aus der Draufsicht in Fig. 1 ist erkennbar, daß im durch das Etikettenband 2 zurückgelegten Weg quer zur Bewegungsrichtung 4 des Etikettenbandes 2 bewegbare Messer 5 einer Schneideinrichtung 6 angeordnet sind. Die Messer 5 der Schneideinrichtung 6 schneiden, wie besser aus Fig. 2 ersichtlich ist, die obere und die untere Kontur des Etikettenbandes 10 und damit der Etiketten 3.

Dem Etikettenband 2 in seiner Bewegungsrichtung 4 folgend, wird dieses um eine Umlenkwalze 7 umgelenkt, wonach die abgeschnitten Randstreifen 8 entlang einer Ablenkwalze 9 abgezogen werden. Das konturierte Etikettenband 10 gelangt dagegen von der Umlenkwalze 7 auf einen Vakuumzylinder 11, der zugleich als Messerwalze zum Abtrennen der einzelnen Etiketten 3 ausgebildet ist.

Der Vakuumzylinder 11 besitzt zu diesem Zweck nach außen vorstehende Messer 12 und 13, die mit einem feststehenden Messer 14 zusammenwirken.

Wie besonders gut aus Fig. 2 ersichtlich ist, führt das Zusammenwirken der Messer 12 und 13 des drehbaren Vakuumzylinders 11 mit dem feststehenden Messer 14 dazu, daß die Etiketten 3 entlang der Schnittlinien 15 und 16 aus dem konturierten Etikettenband 10 herausgetrennt werden. Das verbleibende Abfallsegment zwischen zwei Etiketten 3 kann mittels einer dargestellten Blas- oder Absaugeinrichtung 43 entfernt werden.

Von dem Vakuumzylinder 11 wird das nun fertiggeschnittene Etikett 3 an eine andere Bearbeitungsstation übergeben.

In Fig. 2 ist die Schneideinrichtung 6 zum Schneiden der Konturen des Etikettenbandes 2 näher dargestellt.

Die Schneideinrichtung 6 umfaßt auch eine Steuereinrichtung, die die Querbewegungen der Konturmesser 5 in Abhängigkeit der Bandgeschwindigkeit steuert.

Zu diesem Zweck ist eine Kurvenscheibe 17 mit Nutkurven 18 über einen Getriebezug mit dem Antrieb für das Etikettenband 2 derart verbunden, daß die Kurvenscheibe 17 synchron mitläuft.

Die Konturmesser 5 sind an dem einen Ende eines maschinenfest verschwenkbar gelagerten Doppelhebels 19 gelagert. Das dem Messer gegenüberliegende Ende der Doppelhebel 19 weist eine Steuerrolle 20 auf, die in die jeweilige Nutkurve 18 der Kurvenscheibe 17 eingreift. Hierdurch wird das zugehörige Konturmesser 5 in der Höhe, also quer zur Bewegungsrichtung des Bandes 2 bewegt. Als Konturmesser kann, wie dargestellt, eine schmale, schnell austauschbare Metallklinge, ein Glühdraht oder auch eine Hochdruck-Wasserstrahldüse verwendet werden.

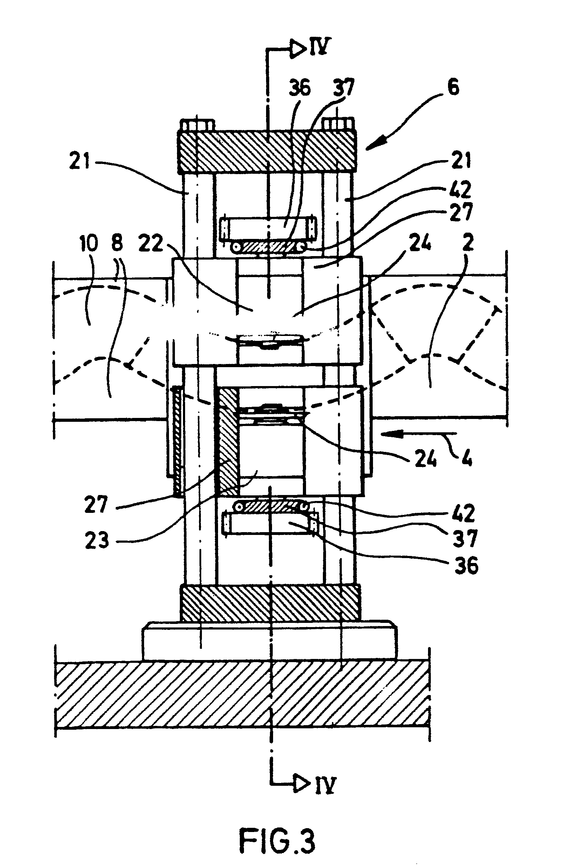

In den Fig. 3 bis 5 ist eine weitere Ausführungsform der Schneideinrichtung 6 der Vorrichtung 1 dargestellt.

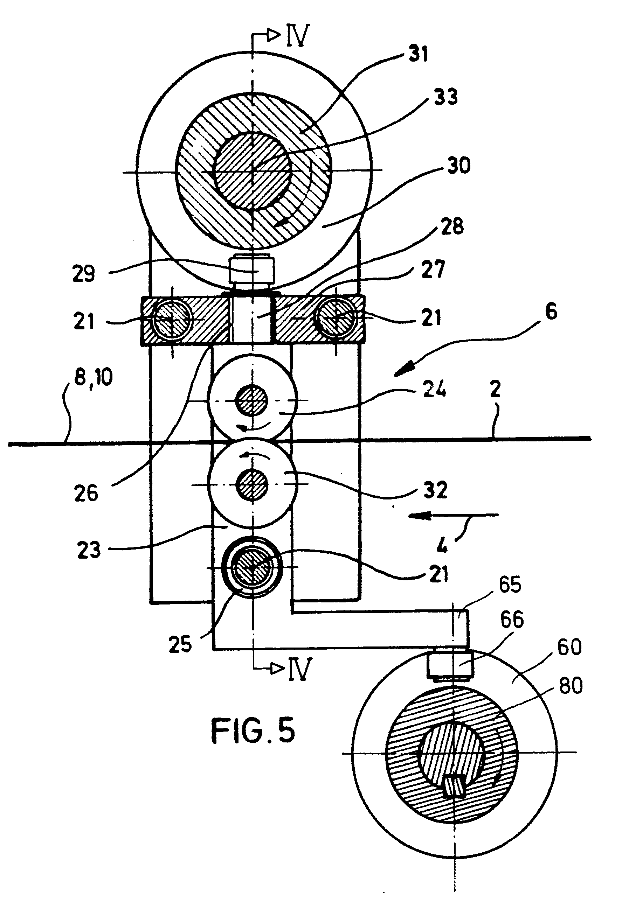

Wie hier insbesondere aus den Fig. 3 und 5 ersichtlich ist, umfaßt die Schneideinrichtung 6 an Vertikalführungen 21 höhenbeweglich, d.h. quer zur Bewegungsrichtung des Bandes beweglich, gelagerte Schlitten 22 und 23 zur Halterung der Konturmesser 24.

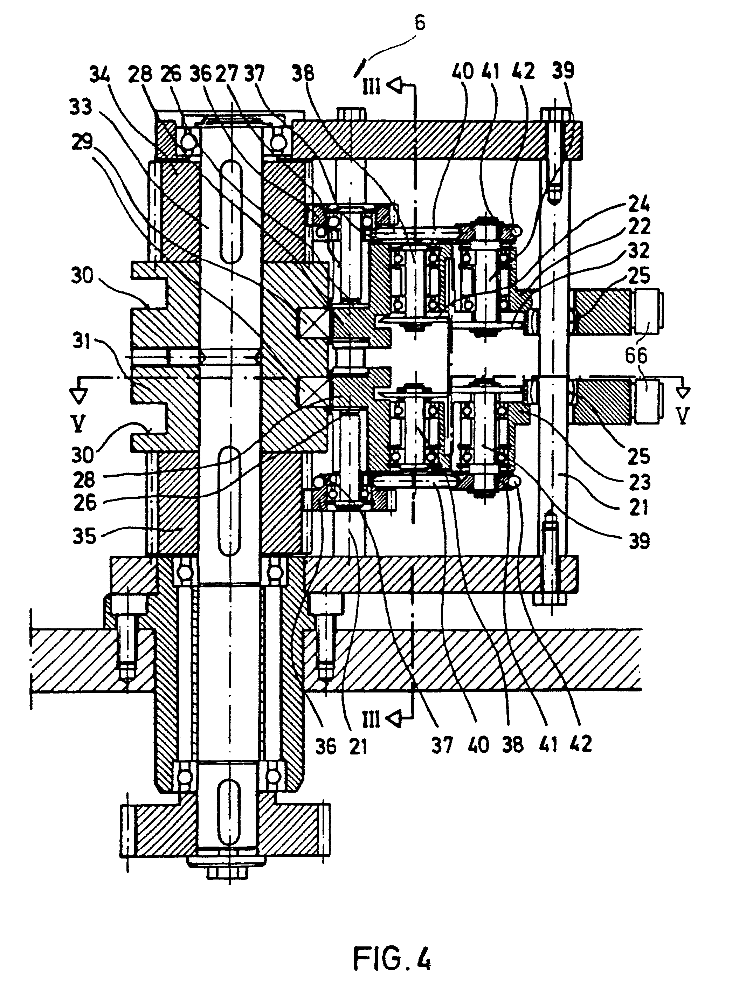

Zur tangentialen Ausrichtung der Konturmesser zur Etikettenkontur sind die Schlitten 22, 23 bezüglich der Vertikalführungen 21 um eine horizontale Achse schwenkbar gelagert. Dies ist besonders gut in Fig. 4 und 5 zu erkennen. An der in Fig. 4 dargestellten rechten Vertikalführung 21 sind die Schlitten 22 und 23 jeweils in Pendellagern 25 gehalten, die zum einen bezüglich der Vertikalführung 21 höhenverschiebbar sind und zum anderen eine gewisse Neigung der Schlitten 22 und 23 zu den Vertikalführungen 21 erlauben. Auf der anderen Seite sind die Schlitten 22 und 23, wie insbesondere auch bis Fig. 5 hervorgeht, in einer Lagerbuchse 26 eines Querträgers 27 gehalten, der selbst wiederum an den beiden nahe an der Kurvenscheibe 31 angeordneten Vertikalführungen 21 höhenbeweglich gelagert ist. Der sich in die Lagerbuchse 26 erstreckende Lagerzapfen 28 trägt eine Steuerrolle 29, die in Nutkurven 30 einer synchron mit dem Bandantrieb laufenden Kurvenscheibe 31 eingreift und damit die Höhenverstellung bewirkt. (vgl. Fig. 4 und Fig. 5)

An den den Pendellagern 25 zugewandten Enden der schwenkbaren Schlitten 22 und 23 sind jeweils ein Schwenkhebel 65 mit einer zugehörigen Kurvenrolle 66 befestigt, die ihrerseits in Nutkurven 60 einer ebenfalls synchron mit dem Bandantrieb laufenden Kurvenscheibe 80 eingreifen, so daß die Nutkurve 60 eine Verschwenkbewegung des jeweiligen Schlittens 22 bzw. 23 um die durch die Mitte der Kurvenrolle 29 und den Schnittpunkt zwischen der Messerscheibe 24 und den Gegenmesser 32 verlaufende Schwenkachse hervorruft. Hierdurch ist gewährleistet, daß sich die Konturmesser 24 auch stets tangential zu der zu schneidenden Kontur des Etikettenbandes 2 bewegen. Zur besseren Übersicht wurde die Kurvenscheibe 80 in der Figur 4 nicht dargestellt.

Wie besonders gut aus den Figuren 4 und 5 ersichtlich ist, sind die Konturmesser 24 als drehbare Messerscheiben ausgebildet, die mit ebenfalls drehbaren Gegenmessern 32 zusammenwirken.

Sowohl die Messerscheiben 24 als auch die Gegenmesser 32 sind antreibbar ausgebildet.

Zu diesem Zweck sind auf der Trägerwelle 33 der angetriebenen Kurvenscheibe 31, Zahnräder 34 und 35 mit breiter Zahnflanke drehfest angebracht. Auf den Querträgern 27, in denen die Schlitten 22 und 23 über die Lagerzapfen 28 schwenkbar gelagert sind, sind achsparallel zur Trägerwelle 33 kleinere Zahnräder 36 angeordnet, die mit den Zahnrädern 34 und 35 im Eingriff stehen und zu diesen, durch die Höhensteuerung der Querträger 27, parallel verschiebbar aber nicht schwenkbar sind. Auf gleicher Welle und drehfest mit den Zahnrädern 36 verbunden, sind Riemenscheiben 37 angeordnet. In gleicher Weise sind auf den Trägerwellen 38 und 39 der Messerscheiben 24 bzw. der Gegenmesser 32 Riemenscheiben 40 bzw. 41 angeordnet. Die Riemenscheiben 37, 40 und 41 sind jeweils über einen flexiblen Rundriemen 42 miteinander verbunden, so daß eine Drehung der Kurvenscheibe 31 über die Zahnräder 34 bzw. 35 und 36 und den Rundriemen 42 eine gegensinnige Drehung der Messerscheiben 24 und der Gegenmesser 32 bewirkt, gleichzeitig aber eine zur Etikettenkontur tangentiale Schwenkbewegung durch die Kurvenscheibe 80 ermöglicht.

Obwohl bei den hier dargestellten Ausführungsbeispielen die Schneideinrichtung durch mechanische Steuereinrichtungen bewegt wird, ist es auch denkbar, auf elektronischem Wege unter Abtastung der Bandgeschwindigkeit über Schrittmotore eine Querbewegung und tangentiale Ausrichtung der Konturmesser zu bewirken. Der Vorteil in einer solchen programmierbaren Steuerung liegt darin, daß durch einfachen Programmwechsel auch eine andere Etikettenform hergestellt werden kann. Für Etikettiermaschinen, mit denen praktisch immer die gleichen Formetiketten verarbeitet werden, ist die in den Ausführungsbeispielen beschriebene mechanische Lösung kostengünstiger.

Anstelle der als Messerscheiben oder Stahlmesser hergestellten Konturmesser können auch Glühdrähte, Laserstrahlen und Wasserstrahlen zum Schneiden der Kontur des Etikettenbands 2 verwendet werden. In diesen Fällen kann auf eine tangential zur Schnittkontur erfolgende Verschwenkung verzichtet werden.

Im folgenden wird die Wirkungsweise der oben beschriebenen Ausführungsbeispiele näher erläutert. Das gemäß Fig. 1 von rechts kommende und sich gemäß Bewegungsrichtung 4 nach links bewegende Etikettenband 2 wird zunächst durch die Schneideinrichtung 6 geführt. Entsprechend der Bandgeschwindigkeit dreht sich die Kurvenscheibe 17 und bewirkt über die in die Nutkurven 18 eingreifenden Doppelhebel eine Querbewegung der Konturmesser 5. Durch diese Querbewegung wird das Etikettenband 2 zu einem konturierten Etikettenband 10 geschnitten.

Anstelle der in Fig. 1 und 2 dargestellten Schneideinrichtung 6 kann die Herstellung des konturierten Etikettenbandes 10 aus mittels der Schneideinrichtung 6 gemäß den Fig. 3 bis 5 bewirkt werden. Auch hier resultiert aus der Drehbewegung der Kurvenscheibe 31 eine Querbewegung der Messer 24 und 32, die zur Ausbildung eines konturierten Etikettenbandes 10 führt. Hinter der Schneideinrichtung 6 werden also drei Bänder, nämlich das konturierte Etikettenband 10 sowie die beiden Randstreifen 8, bis zur nächsten Walze, nämlich der Umlenkwalze 7 weitergeführt.

An der Umlenkwalze 7 wälzt sich die Ablenkwalze 9 ab, über die die Randstreifen 8 abgeführt werden. Das mittlere, konutierte Etikettenband 10 wird um die Umlenkwalze 7 weiter umgelenkt und gelangt auf den Vakuumzylinder 11, der auf seinem Umfang mit Messern 12 und 13 bestückt ist. Sobald die Messer 12 und 13 an dem feststehenden Messer 14 vorbeifahren, werden die Etiketten 3 entlang der Schnittlinien 15 und 16 von dem konturierten Etikettenband 10 abgetrennt. Durch das in dem Zylinder 11 erzeugte Vakuum bleiben die Etiketten 3 haften, während die zwischen den Schnittlinien 15 und 16 verbleibenden Abfallsegmente durch eine Absaug- oder Abblaseinrichtung oder dgl. entfernt werden. Die so hergestellten Etiketten 3 werden wie herkömmliche Stapeletiketten auch der weiteren Bearbeitungsstation zugeführt.

**Patentansprüche**

1. Verfahren zum Schneiden von konturierten Etiketten in einem Etikettieraggregat aus einem kontinuierlich bewegten Etikettenband, bei dem die Etiketten während der Bandbewegung herausgeschnitten werden, **dadurch gekennzeichnet,** daß die obere und/oder die untere Kontur der Etiketten (3) während der Bewegung des Etikettenbandes (2) in einem Schnitt kontinuierlich fortschreitend geschnitten werden, so daß das Etikettenband (10) nachher mit einer oberen und/oder unteren Kontur versehen ist, und
daß das konturierte Etikettenband (10) unmittelbar nach dem Schneiden der Konturen in die einzelnen Etiketten (3) abgetrennt wird.

2. Vorrichtung zum Schneiden von konturierten Etiketten in einem Etikettieraggregat aus einem kontinuierlich bewegten Etikettenband, mit einer Schneideinrichtung zum Heraustrennen der einzelnen Etiketten, die mindestens ein sich mit dem Etikettenband mitbewegendes Messer aufweist, **dadurch gekennzeichnet,** daß die Schneideinrichtung (6) ein oberes und/oder ein unteres quer zur Bewegungsrichtung (4) des Bandes (2) bewegbares Konturmesser (5, 24) zum Schneiden einer oberen und/oder einer unteren Etikettenkontur aufweist und daß das sich mit dem Etikettenband (2) mitbewegende Messer (12, 13) zum Abtrennen der einzelnen Etiketten (3) aus dem konturierten Etikettenband (10) ausgebildet ist.

3. Vorrichtung nach Anspruch 2, **dadurch gekennzeichnet,** daß das sich mitbewegende Messer (12, 13) als mit einem feststehenden Messer (14) zusammenwirkende Messerwalze (11) ausgebildet ist.

4. Vorrichtung nach Anspruch 2 oder 3, **dadurch gekennzeichnet,** daß die Schneideinrichtung (6) eine Steuereinrichtung aufweist, die die Konturmesser (5, 24) in Abhängigkeit der Bandgeschwindigkeit quer zur Bandtransportrichtung (4) steuert.

5. Vorrichtung nach mindestens einem der Ansprüche 2 bis 4, **dadurch gekennzeichnet,** daß die Steuereinrichtung für die Querbewegung der Konturmesser (5, 24) eine mit dem Etikettenbandantrieb antriebsverbundene, synchron laufende Kurvenscheibe (17, 31) mit Nutkurven (18, 20) umfaßt.

6. Vorrichtung nach mindestens einem der Ansprüche 2 bis 4, **dadurch gekennzeichnet,** daß die Steuereinrichtung eine zweite Kurvenscheibe (80) umfaßt, die die Konturmesser (5, 24) im wesentlichen tangential zur zu schneidenden Kontur ausrichtet.

7. Vorrichtung nach mindestens einem der Ansprüche 2 bis 6, **dadurch gekennzeichnet,** daß das Konturmesser (5) an einem ortsfest gelagerten Doppelhebel (19) angebracht ist, dessen anderes Ende mit einer Steuerrolle (20) in eine Nutkurve (18) der Kurvenscheibe (17) eingreift.

8. Vorrichtung nach mindestens einem der Ansprüche 2 bis 7, **dadurch gekennzeichnet,** daß die Schneideinrichtung (6) an Vertikalführungen (21) höhenbeweglich gelagerte Schlitten (22, 23) zur Halterung der Konturmesser (24, 32) umfaßt.

9. Vorrichtung nach Anspruch 8, **dadurch gekennzeichnet,** daß die Schlitten (22, 23) zur tangentialen Ausrichtung der Konturmesser (24, 32) zur Etikettenkontur bezüglich der Vertikalführung (21) um eine horizontale Achse schwenkbar gelagert sind.

10. Vorrichtung nach mindestens einem der Ansprüche 2 bis 9, **dadurch gekennzeichnet,** daß die Steuereinrichtung eine erste Kurvenscheibe (31) für die Querbewegung und eine zweite Kurvenscheibe (80) zur tangentialen Ausrichtung der Schlitten (22, 23) umfaßt.

11. Vorrichtung nach mindestens einem der Ansprüche 2 bis 10, **dadurch gekennzeichnet,** daß die Konturmesser (24) als drehbar gelagerte und mit ebenfalls gelagerten Gegenmessern (32) zusammenwirkende Messerscheiben (24) ausgebildet sind.

12. Vorrichtung nach Anspruch 11, **dadurch gekennzeichnet,** daß die Messerscheiben (24) und die Gegenmesser (32) antreibbar ausgebildet sind.

13. Vorrichtung nach Anspruch 11 oder 12, **dadurch gekennzeichnet,** daß zum Antrieb der Messerscheiben (24) und Gegenmesser (32) ein an einer Vertikalführung (21) höhenbewegliches Zahnrad (36) angeordnet ist.

14. Vorrichtung nach Anspruch 13, **dadurch gekennzeichnet,** daß an einer die Kurvenscheibe (31) antreibenden Welle (33) ein mit dem höhenbeweglichen Zahnrad (36) kämmendes Antriebszahnrad (34, 35) mit breiter Zahnflanke drehfest angebracht ist.

15. Vorrichtung nach Anspruch 13, oder 14, **dadurch gekennzeichnet,** daß das höhenbewegliche Zahnrad (36) über einen flexiblen Riementrieb (37 bis 42) mit den an den Schlitten (22, 23) angeordneten Lagerwellen der Scheibenmesser (24) und der Gegenmesser (32) antriebsverbunden ist.

16. Vorrichtung nach mindestens einem der Ansprüche 2 bis 15, **dadurch gekennzeichnet,** daß die Messerwalze (11) als die konturierten Etiketten (3) ansaugender Vakuumzylinder ausgebildet ist.

17. Vorrichtung nach mindestens einem der Ansprüche 2 bis 16, **dadurch gekennzeichnet,** daß zwischen den Konturmessern (5) und der Messerwalze (11) ein Walzenpaar (7, 9) angeordnet ist, wobei die eine Walze (7) als Umlenkwalze für das konturierte Etikettenband (10) ausgebildet ist, während die andere Walze (9) als Ablenkwalze für die abgeschnittenen Randstreifen (8) ausgebildet ist.

18. Vorrichtung nach mindestens einem der Ansprüche 2 bis 17, **dadurch gekennzeichnet,** daß als Konturmesser Glühdrähte vorgesehen sind.

19. Vorrichtung nach mindestens einem der Ansprüche 2 bis 18, **dadurch gekennzeichnet,** daß als Konturmesser eine Laserkanone vorgesehen ist.

20. Vorrichtung nach mindestens einem der Ansprüche 2 bis 19, **dadurch gekennzeichnet,** daß als Konturmesser eine Wasserstrahlsäge vorgesehen ist.

**Claims**

1. Method for cutting contoured labels in a labelling unit from a continuously moving label strip, in which the labels are cut out during movement of the strip, characterised in that the upper and/or the lower contour of the labels (3) is continuously cut progressively in one cut during movement of the label strip (2), so that the label strip (10) is subsequently provided with an upper and/or lower contour, and that the contoured label strip (10) is separated into the individual labels (3) immediately after cutting the contours.

2. Apparatus for cutting contoured labels in a labelling unit from a continuously moving label strip, with a cutting device for cutting out the individual labels, which comprises at least one cutter moving with the label strip, characterised in that the cutting device (6) comprises an upper and/or a lower contour cutter (5, 24) movable transversely to the direction of travel (4) of the strip (2) for cutting an upper and/or lower label contour and that the cutter (12, 13) which moves with the label strip (2) is designed for separating the individual labels (3) from the contoured label strip (10).

3. Apparatus according to claim 2, characterised in that the cutter (12, 13) moving with the strip is designed as a cutter roller (11) cooperating with a stationary cutter (14).

4. Apparatus according to claim 2 or 3, characterised in that the cutting device (6) comprises a control device which controls the contour cutters (5, 24) as a function of the speed of the strip transversely to the direction of transport (4) of the strip.

5. Apparatus according to one or more of claims 2 to 4, characterised in that the control device for transverse movement of the contour cutters (5, 24) includes a synchronously running cam (17, 31) connected for driving purposes to the label strip drive, with curved grooves (18, 20).

6. Apparatus according to one or more of claims 2 to 4, characterised in that the control device includes a second cam (80) which aligns the contour cutters (5, 24) essentially tangentially to the contour to be cut.

7. Apparatus according to one or more of claims 2 to 6, characterised in that the contour cutter (5) is mounted on a stationarily mounted double lever (19) the other end of which engages by a control roller (20) in a curved groove (18) of the cam (17).

8. Apparatus according to one or more of claims 2 to 7, characterised in that the cutting device (6) includes carriages (22, 23) mounted vertically movably on vertical guides (21), for supporting the contour cutters (24, 32).

9. Apparatus according to claim 8, characterised in that the carriages (22, 23) for tangential alignment of the contour cutters (24, 32) to the label contour are pivotable about a horizontal axis relative to the vertical guide (21).

10. Apparatus according to one or more of claims 2 to 9, characterised in that the control device includes a first cam (31) for transverse movement and a second cam (80) for tangential alignment of the carriages (22, 23).

11. Apparatus according to one or more of claims 2 to 10, characterised in that the contour cutters (24) are constructed as rotatably mounted cutter disc (24) cooperating with counter-cutters (32), mounted likewise.

12. Apparatus according to claim 11, characterised in that the cutter discs (24) and the counter-cutters (32) are drivable.

13. Apparatus according to claim 11 or 12, characterised in that a gear (36) vertically movable on a vertical guide (21) is arranged for driving the cutter discs (24) and counter-cutters (32).

14. Apparatus according to claim 13, characterised in that a driving gear (34, 35) of wide tooth flank meshing with the vertically movable gear (36) is mounted non-rotatably on a shaft (33) driving the cam (31).

15. Apparatus according to claim 13 or 14, characterised in that the vertically movable gear (36) is connected for driving purposes by a flexible belt drive (37 to 42) to the mounting shafts of the disc cutters (24) and counter-cutters (32), which are mounted on the carriages (22, 23).

16. Apparatus according to one or more of claims 2 to 15, characterised in that the cutter roller (11) is constructed as a vacuum cylinder which draws the contoured labels (3) by suction.

17. Apparatus according to one or more of claims 2 to 16, characterised in that between the contour cutters (5) and the cutter roller (11) is arranged a pair of rollers (7, 9), wherein one roller (7) is constructed as a guide roller for the contoured label strip (10), while the other roller (9) is constructed as a deflector roller for the cut-off edge strips (8).

18. Apparatus according to one or more of claims 2 to 17, characterised in that heated filaments are provided as a contour cutter.

19. Apparatus according to one or more of claims 2 to 18, characterised in that a laser gun is provided as a contour cutter.

20. Apparatus according to one or more of claims 2 to 19, characterised in that a water jet saw is provided as a contour cutter.

**Revendications**

1. Méthode pour découper dans une unité d'étiquetage des étiquettes ayant des contours complexes à partir d'une bande d'étiquettes déplacée en continu, les étiquettes étant découpées pendant le déplacement de la bande, **caractérisée en ce** que, pendant le mouvement de la bande d'étiquettes (2), le contour supérieur et/ou le contour inférieur des étiquettes (3) sont découpés en progression continue en une seule coupe, de manière que la bande d'étiquettes (10) est munie ensuite d'un contour supérieur et/ou d'un contour inférieur, et que la bande d'étiquettes contournée (10) est sectionnée, immédiatement après la découpe des contours, en différentes étiquettes (3).

2. Dispositif pour découper dans une unité d'étiquetage des étiquettes ayant des contours complexes à partir d'une bande d'étiquettes déplacée en continu, comprenant un dispositif de coupe pour le découpage des différentes étiquettes lequel comporte au moins une lame entraînée avec la bande d'étiquettes, **caractérisé en ce** que le dispositif de coupe (6) comprend une lame supérieure et/ou une lame de contournage supérieure et/ou une lame de contournage inférieure (5, 24) mobile dans le sens transversal par rapport à la direction de mouvement (4) de la bande d'étiquettes (2) et destinée au découpage d'un contour d'étiquette supérieur et/ou inférieur, et que la lame (12, 13) déplacée avec la bande d'étiquettes (2) est conformée pour la séparation des différentes étiquettes (3) dans la bande d'étiquettes contournée (10).

3. Dispositif selon la revendication 2, caractérisé en ce que la lame (12, 13) déplacée est conformée en cylindre de coupe (11) coopérant avec une lame fixe (14).

4. Dispositif selon l'une des revendications 2 ou 3, caractérisé en ce que le dispositif de coupe (6) comprend un dispositif de commande qui commande les lames de contournage (5, 24) en fonction de la vitesse de la bande, transversalement à la direction de transport (4) de la bande.

5. Dispositif selon l'une quelconque des revendications 2 à 4, caractérisé en ce que le dispositif de commande pour le mouvement transversal des lames de contournage (5, 24) comprend un disque à cames (17, 31) avec des cames à rainure (18, 20) couplé avec l'entraînement de la bande d'étiquettes et tournant en synchronisme avec celui-ci.

6. Dispositif selon l'une quelconque des revendications 2 à 4, caractérisé en ce que le dispositif de commande comprend un second disque à cames (80) qui aligne les lames de contournage (5, 24) sensiblement tangentiellement par rapport au contour à découper.

7. Dispositif selon l'une quelconque des revendications 2 à 6, caractérisé en ce que la lame de contournage (5) est montée sur un levier double (19) stationnaire dont l'autre extrémité s'engage avec un galet de commande (20) dans une came à rainure (18) du disque à cames (17).

8. Dispositif selon l'une quelconque des revendications 2 à 7, caractérisé en ce que le dispositif de coupe (6) comprend des chariots (22, 23) pour la fixation des lames de contournage (24, 32) qui peuvent être déplacés sur des guidages verticaux (21).

9. Dispositif selon la revendication 8, caractérisé en ce que, pour l'alignement tangentiel des lames de contournage (24, 32) par rapport au contour des étiquettes, les chariots (22, 23) peuvent pivoter autour d'un axe horizontal par rapport au guidage vertical (21).

10. Dispositif selon l'une quelconque des revendications 2 à 9, caractérisé en ce que le dispositif de commande comprend un premier disque à cames (31) pour le mouvement transversal et un second disque à cames (80) pour l'alignement tangentiel des chariots (22, 23).

11. Dispositif selon l'une quelconque des revendications 2 à 10, caractérisé en ce que les lames de contournage (24) sont conformées en disques porte-lames (24) tournants qui coopèrent avec des lames conjuguées (32) également montées de manière tournante.

12. Dispositif selon la revendication 11, caractérisé en ce que les disques porte-lames (24) et les lames conjuguées (32) peuvent être entraînés.

13. Dispositif selon l'une des revendications 11 ou 12, caractérisé en ce qu'il comprend pour l'entraînement des disques porte-lames (24) et des lames conjuguées (32), une roue dentée (36) déplaçable en hauteur sur un guidage vertical (21).

14. Dispositif selon la revendication 13, caractérisé en ce que sur un arbre (33) entraînant le disque à cames (31) est montée de manière rigide en rotation une roue dentée d'entraînement (34, 35) à large flanc des dents qui coopère avec la roue dentée (36) déplaçable en hauteur.

15. Dispositif selon l'une des revendications 13 ou 14, caractérisé en ce que la roue dentée (36) déplaçable en hauteur est couplée, par l'intermédiaire d'une commande à courroie flexible (37 à 42), avec les arbres porteurs des disques porte-lames (24) et des lames conjuguées (32) montés sur les chariots (22, 23).

16. Dispositif selon l'une quelconque des revendications 2 à 15, caractérisé en ce que le cylindre de coupe (11) est conformé en cylindre à vide aspirant les étiquettes contournées (3).

17. Dispositif selon l'une quelconque des revendications 2 à 16, caractérisé en ce que, entre les lames de contournage (5) et le cylindre de coupe (11) est disposée une paire de cylindres (7, 9), l'un des cylindres (7) étant conformé en cylindre déflecteur pour la bande d'étiquettes contournée (10), tandis que l'autre cylindre (9) est conformé en cylindre de déviation pour les bandes latérales (8) coupées.

18. Dispositif selon l'une quelconque des revendications 2 à 17, caractérisé en ce que des filaments chauffants sont prévus comme lames de contournage.

19. Dispositif selon l'une quelconque des revendications 2 à 18, caractérisé en ce qu'un canon à laser est prévu comme lame de contournage.

20. Dispositif selon l'une quelconque des revendications 2 à 19, caractérisé en ce qu'une scie par jet d'eau est prévue comme lame de contournage.

FIG.1

EP 0 289 878 B1

FIG. 2

FIG.3

FIG.4

FIG.5